Europäisches Patentamt

**European Patent Office**

**Office européen des brevets**

(11) Veröffentlichungsnummer: **0 212 065**
A1

(12) **EUROPÄISCHE PATENTANMELDUNG**

(21) Anmeldenummer: **86106051.5**

(22) Anmeldetag: **02.05.86**

(51) Int. Cl.⁴: **G 02 F 1/133**

(30) Priorität: **05.07.85 DE 3524086**

(43) Veröffentlichungstag der Anmeldung: **04.03.87**
**Patentblatt 87/10**

(84) Benannte Vertragsstaaten: **DE FR GB IT SE**

(71) Anmelder: **VDO Adolf Schindling AG, Gräfstrasse 103,
D-6000 Frankfurt/Main (DE)**

(72) Erfinder: **Nickol, Friedhelm Wilhelm, Am Honigbaum 35,
D-6239 Effstein 4 (DE)**
Erfinder: **Fertig, Werner, Dr., Paul-Wagner-Strasse 66,
D-6100 Darmstadt (DE)**

(74) Vertreter: **Klein, Thomas, Dipl.-Ing. (FH) et al, Sodener
Strasse 9 Postfach 6140, D-6231 Schwalbach a. Ts. (DE)**

(54) **Flüssigkristallzelle.**

(57) Bei einer Flüssigkristallzelle mit zwei im Abstand zueinander angeordneten Substraten (1, 2), die zwischen sich einen mit Flüssigkristallsubstanz (3) gefüllten Zellenraum bilden, sind die auf mindestens einem Substrat angeordneten Strukturen (6) teilweise mit einer als Abstandshalter dienenden Schicht (10) versehen. Die Schicht besteht vorzugsweise aus Photoresistlack und ist insbesondere auf Datenleitungen oder anderen undurchsichtigen Elementen angeordnet.

0212065

VDO Adolf Schindling AG

Gräfstraße 103
6000 Frankfurt/Main 90
G-R G 1061 / 1838
19. Juni 1985

## Flüssigkristallzelle

Die Erfindung betrifft eine Flüssigkristallzelle mit zwei im Abstand zueinander angeordneten Substraten, die zwischen sich einen mit Flüssigkristallsubstanz gefüllten Zellenraum bilden, mit zellenraumseitig auf den Substraten angeordneten Strukturen, welche von Datenleitungen, Elektroden und ggf. anderen Elementen gebildet werden.

Zur Abstandshaltung zwischen den den Zellenraum bildenden Substraten von Flüssigkristallzellen sind verschiedene Maßnahmen bekannt. So ist es beispielsweise bekannt, walzenförmige Glasfaserabschnitte vor der Montage der Flüssigkristallzelle auf eines der Substrate aufzustreuen. Die Abstandshalter, auch Spacer genannt, werden dadurch statistisch verteilt, wobei die Tragfähigkeit sich nach den Stellen mit der geringsten Dichte richtet. Es müssen also mehr Abstandshalter aufgetragen werden, als an sich erforderlich sind.

...

An die Abstandshalter werden verschiedene Anforderungen gestellt. So sollte beispielsweise die Flächenpressung zwischen Abstandshalter und Substrat nicht zu groß sein, ihr Anteil an der Tragkraft sollte trotz Abweichungen der Größe der Abstandshalter voneinander etwa gleich sein und ferner sollten sie ebenfalls Unebenheiten des Substrats ausgleichen können. Zur Erfüllung dieser Forderungen wurden bereits Abstandshalter aus Kunststoffkugeln, welche ebenfalls aufgestreut werden, sowie mit Kunststoff umhüllte Glaskörper bekannt.

Die bekannten Maßnahmen zur Abstandshaltung zwischen den Substraten haben jedoch den gemeinsamen Nachteil, daß eine statistische Verteilung gegeben ist und daß ein Einfluß auf die optische Qualität der Flüssigkristallzelle vorhanden ist. Der Durchmesser der bekannten Abstandshalter ist zwar derart gering (0,01 mm), daß ein Abstandshalter einzeln nicht als Störung sichtbar ist, durch statistische Anhäufungen ergeben sich jedoch Störungen.

Insbesondere bei sogenannter Negativdarstellung, bei welcher eine Flüssigkristallzelle von der vom Betrachter abgewandten Seite beleuchtet wird und nur an den angeregten Bildpunkten Licht durch die Flüssigkristallzelle hindurchtritt, stören die bekannten Abstandshalter dadurch, daß sich keine vollständige Schwärzung der nicht angeregten Teile der Flüssigkristallzelle einstellt.

Aufgabe der vorliegenden Erfindung ist es, eine Flüssigkristallzelle und ein Verfahren zur Herstellung einer Flüssigkristallzelle anzugeben, bei welcher die Abstandshalter die vorerwähnten Nachteile

...

0212065

nicht aufweisen.

Diese Aufgabe wird erfindungsgemäß dadurch gelöst, daß die auf mindestens einem Substrat angeordneten Strukturen teilweise mit einer als Abstandshalter dienenden Schicht versehen sind. Eine Flüssigkristallzelle mit den erfindungsgemäßen Merkmalen hat den Vorteil, daß durch die gleichmäßige Verteilung der Abstandshalter eine höhere mechanische Belastbarkeit gegeben ist und daß bessere optische Eigenschaften erreichbar sind. Insbesondere bei Negativdarstellung ergeben sich in den nicht angesteuerten Bildelementen keine unerwünschten Aufhellungen.

Eine Weiterbildung der Erfindung besteht darin, daß die als Abstandshalter dienende Schicht aus Photoresistlack besteht. Daraus ergibt sich ein weiterer Vorteil, daß bei geeigneter Reihenfolge der einzelnen Herstellungsschritte ein zusätzlicher Verfahrensschritt für die Aufbringung von Abstandshaltern eingespart werden kann.

Bei weiteren Ausführungsformen der Erfindung werden Datenleitungen oder - vorzugsweise als Dünnfilmelemente aufgebrachte - Schaltelemente mit der als Abstandshalter dienenden Schicht versehen. Hierbei ist es vorteilhaft, daß keinerlei optische Beeinflussung gegeben ist und daß beim Herstellungsverfahren der Photoresistlack, welcher die Datenleitungen bei nachfolgenden Ätzvorgängen schützt, lediglich nicht abgewaschen zu werden braucht, um die Abstandshalter zu erhalten.

...

0212065

Gemäß einer anderen Weiterbildung der Erfindung können bei einer erfindungsgemäßen Flüssigkristallzelle die Abstandshalter in äußerst günstiger Weise zu Kontaktierungen zwischen Elementen auf beiden Substraten verwendet werden. Schließlich ist als weiterer Vorteil der Erfindung anzusehen, daß der Abstand zwischen den Substraten durch die Änderung der Prozessparameter bei der Herstellung beeinflußbar ist.

Ausführungsbeispiele der Erfindung sind in der Zeichnung dargestellt und werden im folgenden näher beschrieben. Es zeigen:

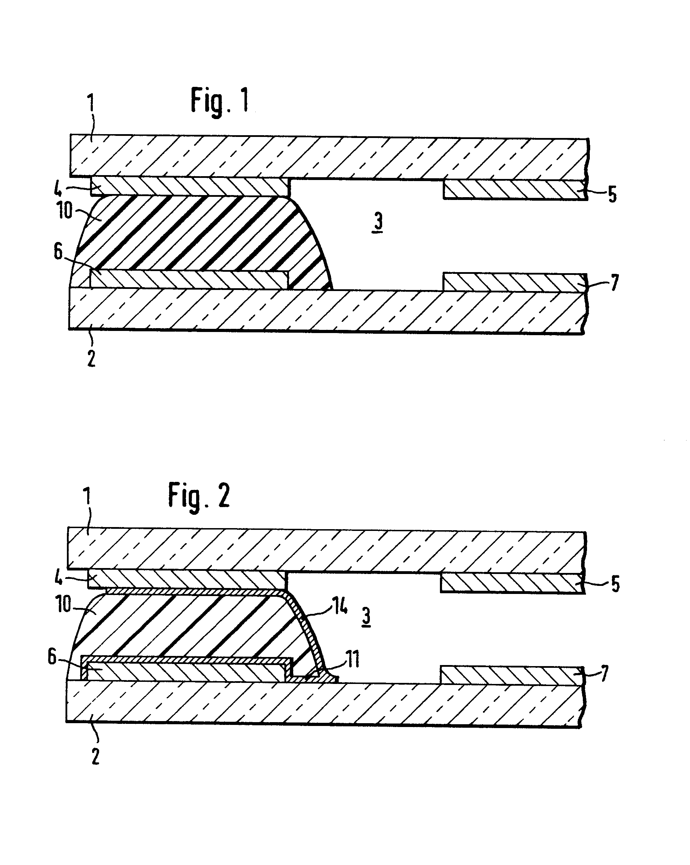

Fig. 1 einen ausschnittsweisen Querschnitt einer erfindungsgemäßen Flüssigkristallzelle, bei welcher eine Datenleitung mit einer als Abstandshalter dienenden Schicht versehen ist und

Fig. 2 einen ausschnittsweisen Querschnitt eines zweiten Ausführungsbeispiels einer Flüssigkristallzelle, bei welcher die als Abstandshalter dienende Schicht gleichzeitig zur Kontaktierung dient.

Gleiche Teile sind in den Figuren mit gleichen Bezugszeichen versehen.

Die dargestellten Flüssigkristallzellen weisen ein erstes Substrat 1 und ein zweites Substrat 2 auf, die zwischen sich einen Zellenraum 3 bilden, der mit Flüssigkristallsubstanz gefüllt ist. Auf dem Substrat 1 ist eine Datenleitung 4 und eine Elektrode 5 angeordnet, während auf dem anderen Substrat 2 eine

...

Datenleitung 6 und eine Bildelektrode 7 vorhanden ist. Die Datenleitungen 4 bzw. 6 sind über nicht dargestellte Schaltelemente mit der Elektrode 5 bzw. der Bildelektrode 7 verbunden. Die Datenleitungen 4, 6 bestehen aus Metall mit guter Leitfähigkeit und sind nicht lichtdurchlässig. Die Elektroden 5, 7 sind durchsichtig und bestehen aus einem Halbleitermaterial.

Als Abstandshalter ist auf die Datenleitung 6 eine Lackschicht 10 aufgebracht, welche vorzugsweise aus dem bei der Herstellung der Flüssigkristallzelle verwendetem Photoresistlack besteht. Durch gezielte Maßnahmen bei der Aufbringung des Lacks kann die Dicke der Lackschicht festgelegt werden. So kann beispielsweise bei der Aufbringung des Lacks nach dem Schleuderverfahren die Dicke der Lackschicht dadurch beeinflußt werden, daß die Viskosität des Lacks durch mehr oder weniger Lösungsmittelzugabe eingestellt wird.

Dadurch, daß sich die Lackschicht 10 nur im Bereich der Datenleitungen befindet, erfolgt keine Beeinflussung der optischen Eigenschaften der Flüssigkristallzelle. Durch flächenhafte Auflage der Lackschicht 10 an der gegenüberliegenden Datenleitung 4 treten keine unzulässig hohen Flächenpressungen auf, so daß eine Beschädigung von feinen Strukturen ausgeschlossen wird. Schließlich weist die Lackschicht 10 eine Elastizität auf, welche zum Ausgleich von unvermeidlichen Ungenauigkeiten der Substrate 1, 2 ausreichend ist. Als alterungsbeständig und chemisch verträglich mit der Flüssigkristallsubstanz hat sich Poliimid-Photoresistlack bewährt. Neben der bereits erwähnten Aufbringung nach dem Schleuderverfahren

...

ist es auch möglich, den Lack durch Druckverfahren aufzubringen.

Bei Flüssigkristallzellen für viele Anwendungen, insbesondere alphanumerische Anzeigevorrichtungen, sind die Strukturen derart fein, daß eine als Abstandshalter dienende Schicht 10 auf den Datenleitungen genügt, um die erforderliche Belastbarkeit zu erreichen. Gemäß einer Weiterbildung der Erfindung ist es jedoch auch möglich, auf den Elektroden in Form eines Punktrasters eine als Abstandshalter dienende Lackschicht aufzubringen. Außer den Datenleitungen 4, 6 und Elektroden 5, 7 können auch andere auf den Substraten 1, 2 aufgebrachte Teile mit einer als Abstandshalter dienenden Schicht 10 versehen werden. Hier kommen insbesondere Dünnfilmtransistoren und Metall-Isolator-Metall-Elemente in Frage.

Einen ausschnittsweisen Querschnitt einer Flüssigkristallzelle, bei welcher eine als Abstandshalter dienende Schicht 10 gleichzeitig zur Kontaktierung dient, zeigt Fig. 2. Dabei ist die Datenleitung 6 mit einer metallischen Schicht 11 überzogen.

Nach Aufbringung der metallischen Schicht 11 wird die Lackschicht 10 aufgebracht. Danach wird durch bekannte Abscheidungsprozesse anschließend an die metallische Schicht 11 auf die Lackschicht 10 eine leitende Schicht 14 aufgebracht. Die leitende Schicht 14 gerät nach dem Zusammenbau der Flüssigkristallzelle in Berührung mit der Datenleitung 4, so daß ein leitender Kontakt zwischen den Datenleitungen 4 und 6 hergestellt ist. Derartige Kontaktierungen können in vorteilhafter Weise dazu verwendet

...

0212065

werden, die nach außen führenden Verbindungen einer Flüssigkristallzelle auf nur einem Substrat anzuordnen.

VDO Adolf Schindling AG
Gräfstraße 103
6000 Frankfurt/Main 90
G-R G 1061 / 1838
19. Juni 1985

## Patentansprüche

1. Flüssigkristallzelle mit zwei im Abstand zueinander angeordneten Substraten, die zwischen sich einen mit Flüssigkristallsubstanz gefüllten Zellenraum bilden, mit zellenraumseitig auf den Substraten angeordneten Strukturen, welche von Datenleitungen, Elektroden und ggf. anderen Elementen gebildet werden, dadurch gekennzeichne,, daß die auf mindestens einem Substrat angeordneten Strukturen teilweise mit einer als Abstandshalter dienenden Schicht (10) versehen sind.

2. Flüssigkristallzelle nach Anspruch 1, dadurch gekennzeichnet, daß die als Abstandshalter dienende Schicht (10) aus Lack besteht.

3. Flüssigkristallzelle nach Anspruch 2, dadurch gekennzeichnet, daß die als Abstandshalter dienende Schicht (10) aus Photoresistlack besteht.

0212065

4. Flüssigkristallzelle nach Anspruch 3, <u>dadurch gekennzeichnet</u>, daß der Photoresistlack ein Poliimidlack ist.

5. Flüssigkristallzelle nach Anspruch 1, <u>dadurch gekennzeichnet</u>, daß Datenleitungen (6) mit der als Abstandshalter dienenden Schicht (10) versehen sind.

6. Flüssigkristallzelle nach Anspruch 1, <u>dadurch gekennzeichnet</u>, daß, vorzugsweise als Dünnfilmelemente aufgebrachte, Schaltelemente mit der als Abstandshalter dienenden Schicht versehen sind.

7. Flüssigkristallzelle nach Anspruch 1, <u>dadurch gekennzeichnet</u>, daß die Elektroden (7) punktrasterartig mit der als Abstandshalter dienenden Schicht versehen sind.

8. Flüssigkristallzelle nach Anspruch 1, <u>dadurch gekennzeichnet</u>, daß die als Abstandshalter dienende Schicht (10) mindestens teilweise mit einer leitenden Schicht (14) überzogen ist.

9. Verfahren zur Herstellung der Flüssigkristallzelle nach Anspruch 1, <u>dadurch gekennzeichnet</u>, daß ein Photoresistlack, welcher einen Teil der auf dem Substrat aufgebrachten Struktur vor einem Ätzvorgang schützt, nach erfolgtem Ätzvorgang nicht abgewaschen wird.

## Fig. 1

1

4

10

6

2

3

5

7

## Fig. 2

1

4

10

6

2

14

3

11

5

7

**Europäisches Patentamt**

# EUROPÄISCHER RECHERCHENBERICHT

## EINSCHLÄGIGE DOKUMENTE

EP 86106051.5

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE - B2 - 2 805 970 (SIEMENS)  * Fig. 1; Spalte 4, Zeile 47 - Spalte 5, Zeile 15; Spalte 5, Zeile 40 - Spalte 6, Zeile 47* | 1 | G 02 F 1/133 |
| A |  | 2,3,7, 9 | |
| | -- | | |
| X | US - A - 3 939 556 (BOREL)  * Fig. 1-3,6,7 * | 1,5,8 | |
| | -- | | |
| Y | DE - A1 - 2 849 402 (SIEMENS)  * Fig. 2; Seite 4, Zeile 15 - Seite 5, Zeile 15 * | 1 | |
| A |  | 7 | **RECHERCHIERTE SACHGEBIETE (Int. Cl.4)** |
| | -- | | |
| X | US - A - 4 249 800 (SPRUIJT)  * Fig. 2 * | 1,7 | G 02 F 1/00 |
| A |  | 2,3 | |
| | ---- | | |

Der vorliegende Recherchenbericht wurde für alle Patentansprüche erstellt.

| Recherchenort | Abschlußdatum der Recherche | Prüfer |
|---|---|---|
| WIEN | 15-10-1986 | GRONAU |